# EUROPÄISCHE PATENTSCHRIFT

(11) **EP 0 726 189 B1**
(45) Veröffentlichungstag und Bekanntmachung des Hinweises auf die Patenterteilung: **22.07.1998**
(21) Anmeldenummer: 95120562.4
(22) Anmeldetag: 27.12.1995
(51) Int. Cl.: B60T 15/36, B60T 13/66

(54) **Druckmittelbetätigte Fahrzeugbremsanlage**
Pressure operated vehicle brake installation
Installation de freinage actionnée par pression pour véhicules

(30) Priorität: 10.02.1995 DE 19504394
(43) Veröffentlichungstag der Anmeldung: 14.08.1996
(73) Patentinhaber: WABCO GmbH, 30453 Hannover (DE); DAIMLER-BENZ AKTIENGESELLSCHAFT, 70567 Stuttgart (DE)
(72) Erfinder: Kiel, Bernd, D-31515 Wunstorf (DE); Unser, Karl-Heinz, D-76461 Muggensturm (DE)
(74) Vertreter: Schrödter, Manfred, Dipl.-Ing.

(56) Entgegenhaltungen:
- EP-A- 0 079 543
- DE-A- 2 738 948
- DE-A- 3 230 970

## Beschreibung

Die Erfindung betrifft eine druckmittelbetätigte Fahrzeugbremsanlage gemäß dem Oberbegriff des Patentanspruchs 1.

Eine derartige Fahrzeugbremsanlage ist aus der EP-A-0 079 543 bekannt.

Bei dieser bekannten, als Zweikreisbremsanlage ausgebildeten Fahrzeugbremsanlage ist sowohl den Bremszylindern der Vorderachse als auch den Bremszylindern der Hinterachse des Fahrzeugs zur Steuerung des Bremsdruckes je eine Relaisventileinrichtung zugeordnet.

Durch die Aufteilung der Bremsanlage in zwei Bremskreise ist sichergestellt, daß bei Ausfall des einen Bremskreises die dem jeweils anderen Bremskreis zugeordneten Bremszylinder noch mit Druckmittel versorgen werden, so daß das Fahrzeug relativ sicher verzögert werden kann.

Bei Ausfall des Hinterachsbremskreises wird noch eine gute Verzögerung des Fahrzeugs erzielt, da bedingt durch die dynamische Achslastverlagerung bei einem Bremsvorgang in etwa 70 - 80 % der Bremskraft von den Rädern der Vorderachse des Fahrzeugs aufgebracht werden.

Fällt jedoch der den Rädern der Vorderachse des Fahrzeugs zugeordnete Bremskreis aus, kann das Erreichen der vom Gesetzgeber vorgeschriebenen, von den Rädern der Hinterachse des Fahrzeugs aufzubringenden Bremskraft problematisch werden. Dies ist insbesondere dann der Fall, wenn es sich um ein Fahrzeug mit einem sehr niedrigen Leergewicht und einem hohen zulässigen Gesamtgewicht handelt, da die Räder der Hinterachse des unbeladenen Fahrzeugs unter ungünstigen Umständen nicht mit der eine gute Verzögerung des Fahrzeugs gewährleistenden Kraft in Richtung auf die Fahrbahn zu belastet werden.

Der Erfindung liegt deshalb die Aufgabe zugrunde, eine druckmittelbetätigte Fahrzeugbremsanlage der eingangs erwähnten Art zu schaffen, die so ausgebildet ist, daß auch unter ungünstigen Fahrbahn- und Gewichtsbedingungen für das Fahrzeug auch bei einem Defekt an einem Bremskreis des Fahrzeugs ein sicheres Verzögern des Fahrzeugs gewährleistet ist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Fahrzeugbremsanlage zu erhalten, bei welcher bei Auftreten eines Defektes an dem einen der beiden Bremskreise die Versorgung des einen der beiden dem defekten Bremskreis zugeordneten Bremszylinder mit Bremsdruck noch sichergestellt ist.

Als Bremsdruck für diesen einen Bremszylinder des defekten Bremskreises kann der Druck des intakten Bremskreises oder auch der Druck einer von den beiden Bremskreisen des Fahrzeugs unabhängigen Druckmittelquelle dienen.

Zur Sicherstellung der Versorgung des einen der beiden Bremszylinder mit Bremsdruck bei Auftreten eines Defekts in dem diese Bremszylinder aufweisenden Bremskreis besteht die diesen Bremszylindern zugeordnete Steuerventileinrichtung aus einem ersten Steuerventil, das dem ersten Bremszylinder dieses Bremskreises zugeordnet ist, und einem zweiten Steuerventil, das dem zweiten Bremszylinder dieses Bremskreises zugeordnet ist.

Das erste Steuerventil ist als zweikreisig ansteuerbares Steuerventil ausgebildet, über das der erste Bremszylinder in Abhängigkeit sowohl von einem dem Bremskreis für den ersten Bremszylinder und den zweiten Bremszylinder zugeordneten Steuersignal als auch von einem einem anderen Bremskreis zugeordneten Steuersignal mit einer Druckmitteleingangskammer des ersten Steuerventils oder mit einer Druckmittelsenke verbindbar ist. Die Druckmitteleingangskammer des ersten Steuerventils ist mit der Druckmittelquelle des dem ersten Bremszylinder und dem zweiten Bremszylinder zugeordneten Bremskreises und mit einer von dieser Druckmittelquelle verschiedenen (unabhängigen) Druckmittelquelle verbunden, wobei zwischen der Druckmitteleingangskammer und den Druckmittelquellen Mittel zum Absichern der beiden Druckmittelquellen gegeneinander angeordnet sind.

Zum Absichern der beiden Druckmittelquellen gegeneinander ist in jedem der beiden Druckmitteleingänge des ersten Steuerventils ein in Richtung auf die Druckmitteleingangskammer zu in die Offenstellung bringbares Rückschlagventil angeordnet, welches bei Auftreten eines Defektes an dem einen Bremskreis verhindert, daß über die Druckmitteleingangskammer des ersten Steuerventils und den defekten Bremskreis Druckmittel aus dem intakten anderen Bremskreis entweicht.

Anhand der Zeichnung wird nachfolgend ein Ausführungsbeispiel der Erfindung näher erläutert.

Es zeigen:
- Fig. 1: eine dreikreisige Fahrzeugbremsanlage mit zwei den Bremszylindern der Vorderachse des Fahrzeugs zugeordneten Steuerventilen und
- Fig. 2: das dem einen der beiden Bremszylinder zugeordnete Steuerventil, welches mit Druckmittel aus zwei Bremskreisen des Fahrzeugs versorgt wird.

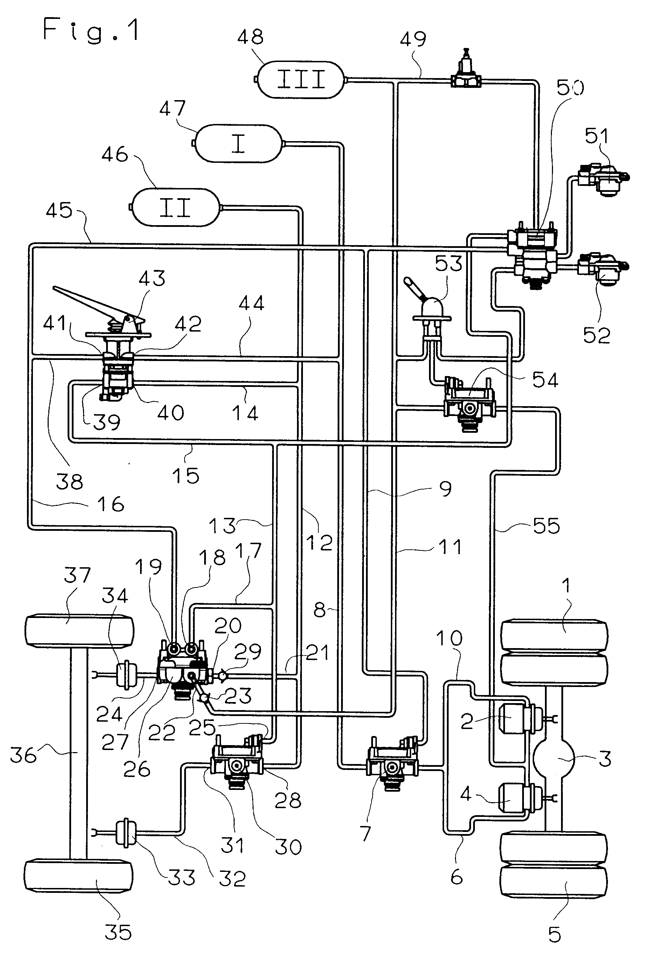

In Fig. 1 ist schematisch die Bremsanlage eines zweiachsigen Zugfahrzeugs dargestellt, wobei eine erste Achse als Hinterachse (3) und eine zweite Achse als Vorderachse (36) dient. Die Hinterachse (3) weist ein erstes Rad (1) und ein zweites Rad (5) und die Vorderachse (36) weist ein erstes Rad (37) und ein zweites Rad (35) auf. Dem ersten Rad (1) der Hinterachse (3) ist ein als Federspeicher-Bremszylinder ausgebildeter erster Bremszylinder (2) und dem zweiten Rad (5) der Hinterachse (3) ist ein als Federspeicher-Bremszylinder ausgebildeter zweiter Bremszylinder (4) zugeordnet. Der erste Bremszylinder (2) und der zweite Bremszylinder (4) sind über Druckmittelleitungen (10) und (6) mit dem Druckmittelausgang einer als Relaisventil ausgebildeten ersten Steuerventileinrichtung (7) verbunden. Über eine Druckmittelleitung (8) steht der Druckmitteleingang der ersten Steuerventileinrichtung (7) mit einem als Druckmittelquelle dienenden ersten Druckmittel-Vorratsbehälter (47) in Verbindung. Über eine Druckmittelleitung (9) sowie mit dieser verbundene Druckmittelleitungen (45) und (38) ist ein Steuereingang der ersten Steuerventileinrichtung (7) mit dem als zweiter Steuerausgang dienenden zweiten Druckmittelausgang (41) eines als Motorwagen-Bremsventil (43) ausgebildeten Mehrkreis-Bremswertgebers verbunden, der einen ersten Druckmitteleingang (40), einen diesem zugeordneten, als ein erster Steuerausgang dienenden ersten Druckmittelausgang (39), einen zweiten Druckmitteleingang (42) und den diesem zugeordneten zweiten Druckmittelausgang (41) besitzt. Der dem zweiten Druckmittelausgang (41) zugeordnete Druckmitteleingang (42) des Motorwagen-Bremsventils (43) steht über eine Druckmittelleitung (44) und die mit dieser verbundene Druckmittelleitung (8) ebenfalls mit dem ersten Druckmittel-Vorratsbehälter (47) in Verbindung.

Über eine Druckmittelleitung (55) und ein Relaisventil (54) sind die beiden Bremszylinder (2) und (4) der Hinterachse (3) an einen ersten Ausgang eines Handbremsventils (53) angeschlossen. Der Eingang des Handbremsventils (53) ist über Druckmittelleitungen (11) und (49) mit einem dritten Druckmittel-Vorratsbehälter (48) verbunden.

Dem ersten Rad (37) der Vorderachse (36) ist ein erster Bremszylinder (34) und dem zweiten Rad (35) der Vorderachse (36) ist ein zweiter Bremszylinder (33) zugeordnet.

Der erste Bremszylinder (34) der Vorderachse (36) ist über eine Druckmittelleitung (24) mit dem Druckmittelausgang (27) eines als Relaisventil ausgebildeten ersten Steuerventils (26) einer das erste Steuerventil (26) und ein zweites Steuerventil (30) aufweisenden zweiten Steuerventileinrichtung (26, 30) verbunden. Ein erster Druckmitteleingang (20) des ersten Steuerventils (26) steht über eine Druckmittelleitung (21), die an eine Druckmittelleitung (12) angeschlossen ist, mit einem zweiten Druckmittel-Vorratsbehälter (46) in Verbindung. Ein zweiter Druckmitteleingang (22) des ersten Steuerventils (26) ist über die Druckmittelleitung (11), welche an die Druckmittelleitung (49) angeschlossen ist, mit dem dritten Druckmittel-Vorratsbehälter (48) verbunden.

Das erste Steuerventil (26) weist einen ersten Steuereingang (18) und einen zweiten Steuereingang (19) auf, wobei der zweite Steuereingang (19) über eine Druckmittelleitung (16) und die mit dieser verbundene Druckmittelleitung (38) mit dem zweiten Druckmittelausgang (41) des Motorwagen-Bremsventils (43) verbunden ist. Der erste Steuereingang (18) des ersten Steuerventils (26) ist über eine Druckmittelleitung (17), eine mit dieser verbundene Druckmittelleitung (13) sowie eine mit der Druckmittelleitung (13) verbundene Druckmittelleitung (15) mit dem ersten Druckmittelausgang (39) des Motorwagen-Bremsventils (43) verbunden.

Der zweite Bremszylinder (33) ist über eine Druckmittelleitung (32) mit dem Ausgang (31) des zweiten Steuerventils (30) der zweiten Steuerventileinrichtung (26, 30) verbunden. Das zweite Steuerventil (30) besitzt einen Druckmitteleingang (28), der über die Druckmittelleitung (12) mit dem zweiten Druckmittel-Vorratsbehälter (46) in Verbindung steht. Ein Steuereingang (25) des zweiten Steuerventils (30) ist über die Druckmittelleitung (13) und die mit dieser verbundene Druckmittelleitung (15) mit dem ersten Druckmittelausgang (39) des Motorvagen-Bremsventils (43) verbunden. Der dem ersten Druckmittelausgang (39) zugeordnete erste Druckmitteleingang (40) des Motorwagen-Bremsventils (43) steht über eine Druckmittelleitung (14) und die mit dieser verbundene Druckmittelleitung (12) ebenfalls mit dem zweiten Druckmittel-Vorratsbehälter (46) in Verbindung.

Über eine Ventileinrichtung (50) sind Kupplungsköpfe (51) und (52) zur Verbindung der Bremsanlage des Zugfahrzeugs mit der Bremsanlage eines Anhängerfahrzeugs mit dem dritten Druckmittel-Vorratsbehälter (48) verbindbar.

Im ersten Druckmitteleingang (20) des ersten Steuerventils (26) der zweiten Steuerventileinrichtung (26, 30) ist ein vom Druck des zweiten Druckmittel-Vorratsbehälters (46) in Richtung auf die Druckmitteleingangskammer des zweiten Steuerventils (26) zu in die Offenstellung bringbares erstes Rückschlagventil (29) angeordnet. Desgleichen ist im zweiten Druckmitteleingang (22) des zweiten Steuerventils (26) ein vom Druck des dritten Druckmittel-Vorratsbehälters (48) in Richtung auf die Druckmitteleingangskammer des zweiten Steuerventils (26) zu in die Offenstellung bringbares zweites Rückschlagventil (23) angeordnet.

Die beiden Rückschlagventile (29) und (23) dienen als Mittel zum Absichern der beiden Druckmittelquellen (46) und (48) gegeneinander.

Die Bremszylinder (2) und (4) der Hinterachse (3) bilden zusammen mit den Druckmittelleitungen (10) und (6), der ersten Steuerventileinrichtung (7), den Druckmittelleitungen (8), (9), (44), (38) und (45), dem ersten Druckmittel-Vorratsbehälter (47) sowie mit dem zweiten Druckmitteleingang (42) und dem zweiten Druckmittelausgang (41) des Motorwagen-Bremsventils (43) einen als Hinterachsbremskreis dienenden ersten Bremskreis (I) der druckmittelbetätigten Fahrzeugbremsanlage.

Von den Bremszylindern (34) und (33) der Vorderachse (36), den Druckmittelleitungen (24) und (32), dem zweiten Steuerventil (30) und dem ersten Steuerventil (26) der zweiten Steuerventileinrichtung (30, 26), den Druckmittelleitungen (12), (14), (15), (13), (17) und (21), dem zweiten Druckmittel-Vorratsbehälter (46) sowie dem ersten Druckmitteleingang (40) und dem ersten Druckmittelausgang (39) des Motorwagen-Bremsventils (43) wird ein als Vorderachsbremskreis dienender zweiter Bremskreis (II) der druckmittelbetätigten Fahrzeugbremsanlage gebildet.

Der dritte Druckmittel-Vorratsbehälter (48), die Druckmittelleitung (49), die Ventileinrichtung (50), die Kupplungsköpfe (51) und (52) sowie das Handbremsventil (53) und das Relaisventil (54) bilden einen dritten Bremskreis (III) der druckmittelbetätigten Fahrzeugbremsanlage, welcher einerseits zur Versorgung einer nicht dargestellten Anhänger-Bremsanlage und andererseits zur Versorgung der Bremszylinder (2) und (4) der Hinterachse (3) des Fahrzeugs mit Bremsdruck dient (Federspeicher-Lösedruck).

Die Druckmitteleingangskammer des ersten Steuerventils (26) wird einerseits über den ersten Druckmitteleingang (20) mit dem Vorratsdruck aus dem zweiten Bremskreis (II) und andererseits über den zweiten Druckmitteleingang (22) mit dem Vorratsdruck aus dem dritten Bremskreis (III) versorgt. Über den ersten Steuereingang (18) wird das erste Steuerventil (26) der zweiten Steuerventileinrichtung (26, 30) mit Druckmittel aus dem zweiten Bremskreis (II) - dem zweiten Bremskreis (II) zugeordnetes pneumatisches Steuersignal- und über den zweiten Steuereingang (19) wird das erste Steuerventil (26) der zweiten Steuerventileinrichtung (26, 30) mit Druckmittel aus dem ersten Bremskreis (I) - dem ersten Bremskreis (I) zugeordnetes pneumatisches Steuersignal - angesteuert.

Die Funktion der vorstehend beschriebenen druckmittelbetätigten Fahrzeugbremsanlage wird nachfolgend näher erläutert.

In der Druckmitteleingangskammer der ersten Steuerventileinrichtung (7) steht Druckmittel aus dem Druckmittel-Vorratsbehälter (47) des ersten Bremskreises (I) an. Der Steuereingang der ersten Steuerventileinrichtung (7) sowie die beiden Bremszylinder (2) und (4) der Hinterachse (3) sind bei nichtbetätigtem Motorwagen-Bremsventil (43) drucklos. In der Druckmitteleingangskammer des zweiten Steuerventils (30) der zweiten Steuerventileinrichtung (26, 30) steht Druck aus dem Druckmittel-Vorratsbehälter (46) des zweiten Bremskreises (II) an. Die Druckmitteleingangskammer des ersten Steuerventils (26) der zweiten Steuerventileinrichtung (26, 30) wird über den ersten Druckmitteleingang (20) mit dem Druck aus dem Druckmittel-Vorratsbehälter (46) des zweiten Bremskreises (II) und über den zweiten Druckmitteleingang (22) mit dem Druck aus dem Druckmittel-Vorratsbehälter (48) des dritten Bremskreises (III) beaufschlagt. Die beiden Steuereingänge (18) und (19) der Steuerventile (26) und (30) der zweiten Steuerventileinrichtung (26, 30) und die Bremszylinder (34) und (33) der Vorderachse (36) des Fahrzeugs sind bei nichtbetätigtem Motorwagen-Bremsventil (43) drucklos.

Wird das Motorwagen-Bremsventil (43) betätigt, strömt vom zweiten Druckmittelausgang (41) des Motorwagen-Bremsventils (43) als Steuerdruck dienendes Druckmittel aus dem Druckmittel-Vorratsbehälter (47) für den ersten Bremskreis (I) über die Druckmittelleitungen (38), (45), (9) zum Steuereingang der als Relaisventil ausgebildeten ersten Steuerventileinrichtung (7). Das Ventil der ersten Steuerventileinrichtung (7) gelangt zunächst in die Offenstellung, und in die Bremszylinder (2) und (4) der Hinterachse (3) des Fahrzeugs strömt über die Druckmittelleitungen (10) und (6) solange Druckmittel aus dem Druckmittel-Vorratsbehälter (47) des ersten Bremskreises (I), bis die erste Steuerventileinrichtung (7) die von ihrem Übersetzungsverhältnis bestimmte Abschlußstellung erreicht hat.

Gleichzeitig gelangt vom zweiten Druckmittelausgang (41) des Motorvagen-Bremsventils (43) über die Druckmittelleitungen (38) und (16) als Steuerdruckmittel dienendes Druckmittel aus dem Druckmittel-Vorratsbehälter (47) für den ersten Bremskreis (I) zum zweiten Steuereingang (19) des ersten Steuerventils (26) der zweiten Steuerventileinrichtung (26, 30). Vom ersten Druckmittelausgang (39) des Motorwagen-Bremsventils (43) strömt über die Druckmittelleitungen (15) und (13) als Steuerdruck dienendes Druckmittel aus dem Druckmittel-Vorratsbehälter (46) für den zweiten Bremskreis (II) zum Steuereingang (25) des zweiten Steuerventils (30) der zweiten Steuerventileinrichtung (26, 30) und über die an die Druckmittelleitung (13) angeschlossene Druckmittelleitung (17) zum ersten Steuereingang (18) des ersten Steuerventils (26) der zweiten Steuerventileinrichtung (26, 30).

Das Ventil des zweiten Steuerventils (30) und das Ventil des ersten Steuerventils (26) der zweiten Steuerventileinrichtung (26, 30) gelangen zunächst in die Offenstellung. In den zweiten Bremszylinder (33) der Vorderachse (36) wird solange Druckmittel aus dem Druckmittel-Vorratsbehälter (46) des zweiten Bremskreises (II) eingesteuert, bis das zweite Steuerventil (30) die von ihrem Übersetzungsverhältnis bestimmte Abschlußstellung erreicht hat. In den ersten Bremszylinder (34) der Vorderachse (36) wird solange Druckmittel aus dem Druckmittel-Vorratsbehälter (46) des zweiten Bremskreises (II) oder Druckmittel aus dem Druckmittel-Vorratsbehälter (48) des dritten Bremskreises (III) eingesteuert, bis das erste Steuerventil (26) die von ihrem Übersetzungsverhältnis bestimmte Abschlußstellung erreicht hat. Da die Druckmitteleingangskammer des ersten Steuerventils (26) über die Rückschlagventile (29) und (23) mit dem Druckmittel-Vorratsbehälter (46) für den zweiten Bremskreis (II) und mit dem Druckmittel-Vorratsbehälter (48) für den dritten Bremskreis (III) verbunden ist, gelangt der jeweils höhere Vorratsdruck in die Druckmitteleingangskammer und somit zu dem ersten Bremszylinder (34) der Vorderachse (36). Die Bremsen der Hinterachse (3) und der Vorderachse (36) werden angelegt und das Fahrzeug wird verzögert.

Tritt z. B. an der vom Druckmittel-Vorratsbehälter (46) des zweiten Bremskreises (II) zum ersten Druckmitteleingang (20) des ersten Steuerventils (26) und zum Druckmitteleingang (28) des zweiten Steuerventils (30) der zweiten Steuerventileinrichtung (26, 30) hinführenden Druckmittelleitung (12) ein Defekt auf, so daß Druckmittel aus der Druckmittelleitung (12) zur Atmosphäre hin entweicht, so wird der zweite Bremszylinder (33) der Vorderachse (36) des Fahrzeugs drucklos. Da auch die von der Druckmittelleitung (12) abzweigende, zum ersten Druckmitteleingang (20) des ersten Steuerventils (26) hinführende Druckmittelleitung (21) drucklos wird, gelangt das erste Rückschlagventil (29) des ersten Steuerventils (26) in die Schließstellung. Die Druckmitteleingangskammer des ersten Steuerventils (26) wird dann vom ersten Rückschlagventil (29) gegen die Druckmittelleitung (12) abgesperrt.

Der erste Bremszylinder (34) der Vorderachse (36) wird jetzt ausschließlich mit dem Druckmittel aus dem Druckmittel-Vorratsbehälter (48) des dritten Bremskreises (III) versorgt. Da nur ein Bremszylinder der Vorderachse (36) des Fahrzeugs ausfällt, kann noch ein Teil der zur Verzögerung des Fahrzeugs notwendigen Bremskraft von dem anderen Bremszylinder der Vorderachse (36) und den Bremszylindern der Hinterachse des Fahrzeugs aufgebracht werden.

Wird dagegen die Druckmittelleitung (11) des dritten Bremskreises (III) defekt, so wird die Druckmitteleingangskammer des ersten Steuerventils (26) der zweiten Steuerventileinrichtung (26, 30) mittels des zweiten Rückschlagventils (23) des ersten Steuerventils (26) gegen die Druckmittelleitung (11) abgesperrt. Der erste Bremszylinder (34) der Vorderachse (36) wird dann ausschließlich mit dem Druckmittel aus dem Druckmittel-Vorratsbehälter (46) des zweiten Bremskreises (II) versorgt. Die Funktionsfähigkeit der Bremsen des ersten Rades (37) und des zweiten Rades (35) der Vorderachse (36) des Fahrzeugs bleibt in diesem Fall erhalten.

Tritt während eines Bremsvorgangs an der vom Motorvagen-Bremsventil (43) zum ersten Steuereingang (18) des ersten Steuerventils (26) der zweiten Steuerventileinrichtung (26, 30) und zum Steuereingang (25) des zweiten Steuerventils (30) der zweiten Steuerventileinrichtung (26, 30) hinführenden Druckmittelleitung (15), oder (13) ein Defekt auf, so werden der erste Steuereingang (18) des ersten Steuerventils (26) und der Steuereingang (25) des zweiten Steuerventils (30) drucklos. Das zweite Steuerventil (30) gelangt von seiner Belüftungsstellung in seine Entlüftungsstellung. Der zweite Bremszylinder (33) der Vorderachse (36) des Fahrzeugs wird entlüftet. Die dem zweiten Rad (35) der Vorderachse (36) zugeordnete Bremse wird wirkungslos.

Da am zweiten Steuereingang (19) des ersten Steuerventils (26) der zweiten Steuerventileinrichtung (26, 30) über den zweiten Druckmittelausgang (41) des Motorvagen-Bremsventils (43) und die Druckmittelleitung (16) als Steuerdruckmittel dienendes Druckmittel aus dem Druckmittel-Vorratsbehälter (47) des ersten Bremskreises (I) ansteht, wird das Ventil des ersten Steuerventils (26) in seiner Position gehalten, in welches es die Druckmitteleingangskammer mit der Druckmittelausgangskammer verbindet. Der erste Bremszylinder (34) der Vorderachse (36) wird mit Druckmittel aus dem Druckmittel-Vorratsbehälter (48) des dritten Bremskreises (III) versorgt. Die Funktion der dem ersten Rad (37) der Vorderachse (36) zugeordneten Bremse bleibt erhalten.

Ebenso bleibt die Funktion der dem ersten Rad (37) der Vorderachse (36) zugeordneten Bremse des Fahrzeugs erhalten, wenn an der vom zweiten Druckmittelausgang (41) des Motorwagen-Bremsventils (43) zum zweiten Steuereingang (19) des ersten Steuerventils (26) der zweiten Steuerventileinrichtung (26, 30) hinführenden Druckmittelleitung (38) bzw. (16) ein Defekt auftritt. In einem solchen Fall wird das erste Steuerventil (26) mit dem als Steuerdruckmittel dienenden Druckmittel aus dem zweiten Bremskreis (II) über den ersten Druckmittelausgang (39) des Motorwagen-Bremsventils (43) sowie die Druckmittelleitungen (15), (13) und (17) angesteuert.

Bei der erfindungsgemäßen druckmittelbetätigten Fahrzeugbremsanlage ist sichergestellt, daß die Funktion wenigstens einer einem Rad der Vorderachse (36) zugeordneten Bremse bei Ausfall des Vorderachs- Bremskreises erhalten bleibt.

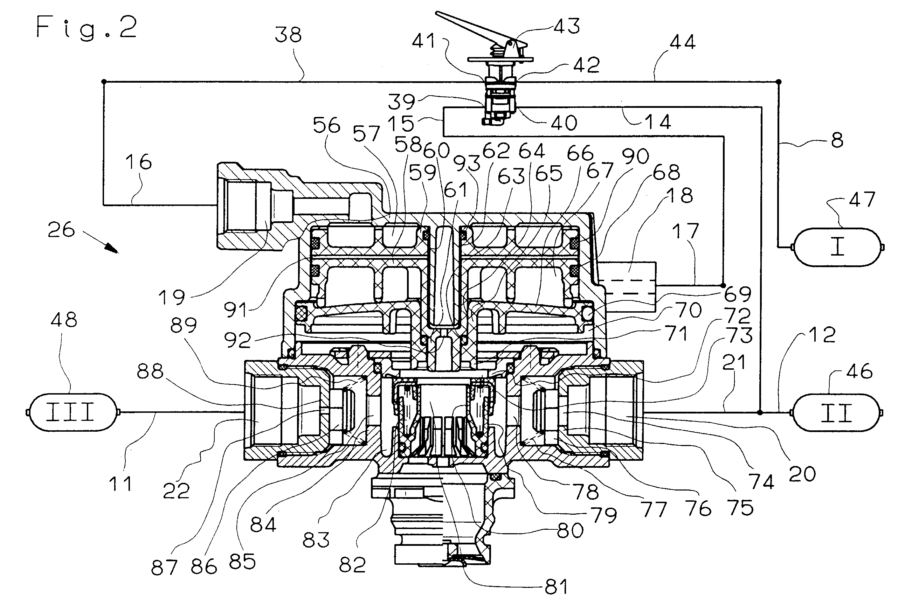

Figur 2 zeigt einen Schnitt durch das in Fig. 1 dargestellte erste Steuerventil (26) der zweiten Steuerventileinrichtung (26, 30).

Das erste Steuerventil (26) der zweiten Steuerventileinrichtung (26, 30) ist als Relaisventil ausgebildet. Der besseren Übersicht halber sind die Druckmitteleingänge und Druckmittelausgänge des Motorwagen-Bremsventils sowie die beiden Druckmitteleingänge und die beiden Steuereingänge des ersten Steuerventils (26) in Fig. 2 mit den gleichen Bezugsziffern versehen wie in Fig. 1.

In einem Gehäuse (56) sind ein als Steuerkolben dienender erster Relaiskolben (66) und ein als Steuerkolben dienender zweiter Relaiskolben (58) hintereinanderliegend und koaxial zueinander angeordnet. Die beiden Relaiskolben (66) und (58) dienen als erste und zweite Steuermittel für das erste Steuerventil. Die beiden Relaiskolben (66) und (58) sind in Richtung der Längsachse des Gehäuses (56) bewegbar. Der erste Relaiskolben (66) begrenzt mit seiner dem zweiten Relaiskolben (58) abgewandten Seite eine Druckmittelausgangskammer (70) und mit seiner dem zweiten Relaiskolben (58) zugewandte Seite eine erste Steuerkammer (67). Die Druckmittelausgangskammer (70) ist mit dem in Fig. 1 dargestellten Druckmittelausgang (27) verbunden, an den die Druckmittelleitung (24) angeschlossen ist. Der Druckmittelausgang (27) und die Druckmittelleitung (24) sind in Fig. 2 nicht dargestellt.

Der zweite Relaiskolben (58) begrenzt mit seiner dem ersten Relaiskolben (66) zugewandten Seite die erste Steuerkammer (67) und mit seiner dem ersten Relaiskolben (66) abgewandten Seite eine zweite Steuerkammer (57). Der erste Relaiskolben (66) trägt auf seinem Umfang einen Dichtring (69), der dichtend an der Wand des Gehäuses (56) anliegt. Der zweite Relaiskolben (58) trägt auf seinem Umfang einen ersten Dichtring (68) und einen zweiten Dichtring (90), welche ebenfalls dichtend an der Wand des Gehäuses (56) anliegen. Die Dichtringe (69), (90) und (68) verhindern, daß ein Austausch von Druckmittel zwischen der ersten Steuerkammer (67) und der zweiten Steuerkammer (57) sowie zwischen der ersten Steuerkammer (67) und der Druckmittelausgangskammer (70) stattfindet.

Zwischen den beiden Dichtringen (68) und (90) des zweiten Relaiskolbens (58) ist in diesem eine Radialbohrung (91) angeordnet, die über einen Spalt (62) in der Führung für den zweiten Relaiskolben (58) und eine in einem Fortsatz (65) des zweiten Relaiskolbens (58) angeordnete Durchgangsöffnung (92) mit einem Druckmittelauslaß des Relaisventils verbunden ist. Mittels der beiden Dichtringe (68) und (90) sowie des Entlüftungskanals (91, 62, 92) soll verhindert werden, daß bei einem Schaden an einem der beiden Dichtringe (68) und (90) dieser Schaden unbemerkt bleibt. Oberhalb der Radialbohrung (91) ist im Bereich der Führung für den zweiten Relaiskolben (58) ein Dichtring (93) angeordnet, der die zweite Steuerkammer (57) und den Spalt (62) gegeneinander abdichtet.

Der zweite Relaiskolben (58) weist einen zentrisch angeordneten, sich einerseits in Richtung auf die zweite Steuerkammer (57) und andererseits in Richtung auf den ersten Relaiskolben (66) zu erstreckenden Fortsatz (59, 61) auf. In dem sich auf die zweite Steuerkammer (57) zu erstreckenden Bereich (59) des Fortsatzes (59, 61) ist zentrisch eine Sackbohrung (62) angeordnet, in welche sich ein zapfenartiger Vorsprung (60) des Gehäuses (56) hineinerstreckt. Der zweite Relaiskolben (58) ist so auf diesem zapfenartigen Vorsprung (60) des Gehäuses (56) gleitend gelagert.

Ebenso weist der erste Relaiskolben (66) einen zentrisch angeordneten, sich in Richtung auf die Druckmittelausgangskammer (70) zu erstreckenden Fortsatz (65) auf, der eine zentrisch angeordnete abgestufte Bohrung (64) besitzt. In die Bohrung (64) erstreckt sich der dem ersten Relaiskolben (66) zugewandte, ebenfalls abgestufte Bereich (61) des Fortsatzes (59, 61) des zweiten Relaiskolbens (58) hinein. Der erste Relaiskolben (66) ist auf dem abgestuften Bereich (61) des Fortsatzes (59, 61) des zweiten Relaiskolbens (58) gleitend geführt. Zwischen den einander zugewandten Seiten der Stufe des abgestuften Bereiches (61) des Fortsatzes (59, 61) des zweiten Relaiskolbens (58) und der Stufe der im Fortsatz (65) des ersten Relaiskolbens (66) angeordneten Bohrung (64) ist ein Dichtring (63) angeordnet, welcher verhindert, daß über den Spalt zwischen der äußeren Mantelfläche des Fortsatzes (59, 61) und der die Bohrung (64) begrenzenden Wand des Fortsatzes (65) ein Austausch von Druckmittel zwischen der ersten Steuerkammer (67) und der Druckmittelausgangskammer (70) stattfindet.

Die erste Steuerkammer (67) steht mit einem als erster Steuereingang (18) dienenden Druckmittelanschluß in Verbindung und die zweite Steuerkammer (57) ist mit einem als zweiter Steuereingang (19) dienenden Druckmittelanschluß verbunden.

Der erste Relaiskolben (66) und der zweite Relaiskolben (58) dienen als Steuermittel zur Betätigung eines im Gehäuse (56) angeordneten kombinierten Einlaß- und Auslaßventils (71, 72, 73). Mittels des kombinierten Einlaß- und Auslaßventils (71, 72, 73) ist die Druckmittelausgangskammer (70) in Abhängigkeit von der Stellung der Relaiskolben (66, 58) mit einer im Gehäuse (56) angeordneten Druckmitteleingangskammer (83) oder mit einem zur Atmosphäre hinführenden Druckmittelauslaß (81) verbindbar oder gegen beide absperrbar. Das kombinierte Einlaß- und Auslaßventil (71, 72, 73) besteht aus einem koaxial zum Fortsatz (65) des ersten Relaiskolbens (66) angeordneten ringförmigen Einlaßventilsitz (72), der im Gehäuse (56) ortsfest angeordnet ist, einem mittels der Kraft einer Feder (82) unter Vorspannung auf dem Einlaßventilsitz (72) gehaltenen Ventilglied (73) sowie einem Auslaßventilsitz (71), der von dem freien Endbereich des Fortsatzes (65) des ersten Relaiskolbens (66) gebildet wird.

Koaxial zum Auslaßventilsitz (71) und zum Einlaßventilsitz (72) ist im Gehäuse (56) dem Auslaßventilsitz (71) und dem Einlaßventilsitz (72) gegenüber ein rohrförmiger Körper angeordnet, der sich in Richtung auf den Einlaßventilsitz (72) und den Auslaßventilsitz (71) zu erstreckt. Der rohrförmige Körper ist auf seiner dem Einlaßventilsitz (72) und den Auslaßventilsitz (71) zugewandten Seite im Querschnitt gabelförmig ausgebildet und weist zwei sich auf den Einlaßventilsitz (72) zu erstreckende, im wesentlichen parallel zur Längsachse des Gehäuses (56) verlaufende Schenkel (79, 80) auf.

Das Ventilglied (73) ist als ein U-förmiger Körper ausgebildet, dessen innerer Schenkel auf der äußeren Mantelfläche des inneren Schenkels (80) des rohrförmigen Körpers und dessen äußere Schenkel auf der äußeren Mantelfläche des äußeren Schenkels (79) des rohrförmigen Körpers gleitend gelagert ist. Das Ventilglied (73) ist so zum rohrförmigen Körper angeordnet, daß die das Ventilglied (73) beaufschlagende Feder (82), welche sich mit ihrem einen Ende am Boden des gabelförmigen Teiles des rohrförmigen Körpers abstützt, mit ihrem anderen Ende auf dem von den beiden Schenkeln des U-förmig ausgebildeten Ventilgliedes (73) begrenzten Boden des Ventilgliedes (73) aufliegt. Der vom rohrförmigen Körper begrenzte Innenraum bildet den Druckmittelauslaß (81) des Relaisventils.

Von der äußeren Mantelfläche des rohrförmigen Körpers und einer dieser gegenüberliegenden ringförmigen Wand (84) des Gehäuses (56) wird die Druckmitteleingangskammer (83) begrenzt. In der Wand (84) des Gehäuses (56) sind ein erster Durchlaß (78) und ein zweiter Durchlaß (85) vorgesehen. Der erste Durchlaß (78) verbindet die Druckmitteleingangskammer (83) mit einem als erster Druckmitteleingang (20) dienenden ersten Druckmittelanschluß und der zweite Durchlaß (85) verbindet die Druckmitteleingangskammer (83) mit einem als zweiter Druckmitteleingang (22) dienenden zweiten Druckmittelanschluß. Der erste Druckmitteleingang (20) ist über eine Druckmittelleitung (21) sowie eine Druckmittelleitung (12) mit dem Druckmittel-Vorratsbehälter (46) des zweiten Bremskreises (II) des Fahrzeugs verbunden. Der zweite Druckmitteleingang (22) ist über eine Druckmittelleitung (11) mit dem Druckmittel-Vorratsbehälter (48) des dritten Bremskreises (III) des Fahrzeugs verbunden.

Der erste Druckmitteleingang (20) ist als ein topfförmiges Teil ausgebildet, dessen Boden (75) einen Durchlaß (74) aufweist. Zwischen der ringförmigen Wand (84) des Gehäuses (56) und dem Boden (75) des ersten Druckmitteleingangs (20) ist ein Ventilglied (76) angeordnet, welches von einer Feder (77) unter Vorspannung auf dem Boden (75) des ersten Druckmitteleingangs (20) gehalten wird. Das Ventilglied (76) deckt den Durchlaß (74) im Boden (75) des ersten Druckmitteleingangs (20) ab. Von dem Boden (75) des ersten Druckmitteleingangs (20), dem in diesem angeordneten Durchlaß (74) und dem Ventilglied (76) wird ein erstes Rückschlagventil (75, 74, 76) gebildet, welches vom Druckmittel des Druckmittel-Vorratsbehälters (46) des zweiten Bremskreises (II) in Richtung auf die Druckmitteleingangskammer (83) des Relaisventils zu in die Offenstellung bringbar ist.

Der zweite Druckmitteleingang (22) ist ebenso als ein topfförmiges Teil ausgebildet, dessen Boden (88) einen Durchlaß (87) aufweist. Zwischen der äußeren Mantelfläche der ringförmigen Wand (84) des Gehäuses (56) und dem Boden (88) des zweiten Druckmitteleingangs (22) ist ein Ventilglied (86) angeordnet, welches auf dem Boden (88) des zweiten Druckmitteleingangs (22) aufliegt und dabei den Durchlaß (87) im Boden (88) des zweiten Druckmitteleingangs (22) abdeckt. Das Ventilglied (86) wird von einer Feder (89) in Richtung auf den Boden (88) des zweiten Druckmitteleingangs (22) zu belastet. Der Boden (88) des zweiten Druckmitteleingangs (22) sowie der im Boden (88) vorgesehene Durchlaß (87) und das Ventilglied (86) bilden ein zweites Rückschlagventil (88, 87, 86), welches vom Druckmittel des Druckmittel-Vorratsbehälters (48) des dritten Bremskreises (III) in Richtung auf die Druckmitteleingangskammer (83) des Relaisventils zu in die Offenstellung bringbar ist. Der Durchlaß (87) des zweiten Rückschlagventils (88, 87, 86) weist einen kleineren Querschnitt auf als der Durchlaß (74) des ersten Rückschlagventils (75, 74, 76), so daß der Druckaufbau in der Druckmitteleingangskammer (83) vorrangig mit dem Druckmittel aus dem zweiten Bremskreis II erfolgt.

Der erste Steuereingang (18) des Relaisventils (26) ist über eine Druckmittelleitung (17) und eine Druckmittelleitung (15) mit dem ersten Druckmittelausgang (39) eines als Motorwagen-Bremsventil (43) ausgebildeten Mehrkreis-Bremswertgebers verbunden. Ein dem ersten Druckmittelausgang (39) zugeordneter erster Druckmitteleingang (40) des Motorwagen-Bremsventils (43) steht über eine Druckmittelleitung (14) und die Druckmittelleitung (12) mit dem Druckmittel-Vorratsbehälter (46) des zweiten Bremskreises (II) in Verbindung. Der zweite Steuereingang (19) des Relaisventils (26) ist über eine Druckmittelleitung (16) und eine Druckmittelleitung (38) mit dem zweiten Druckmittelausgang (41) des Motorwagen-Bremsventils (43) verbunden. Über Druckmittelleitungen (44) und (8) ist ein dem zweiten Druckmittelausgang (41) zugeordneter zweiter Druckmitteleingang (42) des Motorwagen-Bremsventils (43) mit einem Druckmittel-Vorratsbehälter (47) eines ersten Bremskreises (I) der druckmittelbetätigten Fahrzeugbremsanlage verbunden.

Wie im vorstehenden bereits erwähnt dient der erste Bremskreis (I) als Hinterachsbremskreis, der zweite Bremskreis (II) als Vorderachsbremskreis und der dritte Bremskreis (III) als Anhänger-Bremskreis zur Versorgung der Anhänger-Bremsanlage.

Die Funktion des beschriebenen Relaisventils (26) in der druckmittelbetätigten Fahrzeugbremsanlage wird nachfolgend näher erläutert.

In der Druckmitteleingangskammer (83) des Relaisventils (26) steht Druckmittel aus dem Druckmittel-Vorratsbehälter (46) des zweiten Bremskreises (II) oder Druckmittel aus dem Druckmittel-Vorratsbehälter (48) des dritten Bremskreises (III) an. Bei nicht betätigtem Motorwagen-Bremsventil (43) sind der erste Steuereingang (18) und der zweite Steuereingang (19) und damit auch die erste Steuerkammer (67) und die zweite Steuerkammer (57) des Relaisventils (26) drucklos. Der erste Relaiskolben (66), der zweite Relaiskolben (58) sowie das kombinierte Einlaß- und Auslaßventil (71, 72, 73) befinden sich in der dargestellten Stellung.

Wird zwecks Durchführung eines Bremsvorgangs, das Motorwagen-Bremsventil (43) betätigt, so gelangt vom zweiten Druckmittelausgang (41) des Motorwagen-Bremsventils (43) über die Druckmittelleitungen (38) und (16) als Steuerdruck dienendes Druckmittel aus dem Druckmittel-Vorratsbehälter (47) des ersten Bremskreises (I) in die zweite Steuerkammer (57) des Relaisventils (26). Gleichzeitig gelangt über den ersten Druckmittelausgang (39) des Motorwagen-Bremsventils (43) über die Druckmittelleitungen (15) und (17) als Steuerdruck dienendes Druckmittel aus dem Druckmittel-Vorratsbehälter (46) des zweiten Bremskreises (II) in die erste Steuerkammer (67) des Relaisventils (26).

Der erste Relaiskolben (66) wird von dem sich in der ersten Steuerkammer (67) aufbauenden Druck in Richtung auf die Druckmittelausgangskammer (70) zu verschoben. Der zweite Relaiskolben (58) verbleibt in seiner Ausgangsstellung, da der sich in der ersten Steuerkammer (67) und in der zweiten Steuerkammer (57) aufbauende Druck den zweiten Relaiskolben (58) im Gleichgewicht halten. Der Auslaßventilsitz (71) des ersten Relaiskolbens (66) setzt auf das Ventilglied (73) auf, wobei das Auslaßventil (73, 71) des kombinierten Einlaß- und Auslaßventils (71, 72, 73) in seine Schließstellung gelangt. Bei der weiteren Abwärtsbewegung des ersten Relaiskolbens (66) wird das Ventilglied (73) vom Einlaßventilsitz (72) abgehoben. Das Einlaßventil (72, 73) befindet sich dann in seiner Offenstellung.

Aus der Druckmitteleingangskammer (83) strömt dann über das geöffnete Einlaßventil (72, 73) Druckmittel in die Druckmittelausgangskammer (70) und von dieser weiter in den ersten Bremszylinder (34) der Vorderachse (36) des Fahrzeugs.

Tritt im zweiten Bremskreis (II) ein Defekt auf, z. B. Bruch der Druckmittelleitung (21), so fällt der Druck am ersten Druckmitteleingang (20) des Relaisventils (26) ab. Bedingt durch den Druckabfall am ersten Druckmitteleingang (20) gelangt das erste Rückschlagventil (75, 74, 76) in seine Schließstellung. Die Druckmitteleingangskammer (83) des Relaisventils (26) wird dann gegen den Druckmitteleingang (20) abgesperrt. Über das dann in die Offenstellung gelangende oder sich bereits in der Offenstellung befindende zweite Rückschlagventil (88, 87, 86) strömt dann Druckmittel aus dem dritten Druckmittel-Vorratsbehälter (48) in die Druckmitteleingangskammer (83) und von dieser durch das geöffnete Einlaßventil (72, 73) in die Druckmittelausgangskammer (70), von welcher es zum ersten Bremszylinder (34) gelangt. In den ersten Bremszylinder (34) wird so lange Druckmittel eingesteuert, bis das Relaisventil (26) seine Abschlußstellung erreicht hat.

Gleichzeitig mit dem Druckabfall am ersten Druckmitteleingang (20) fällt auch der Druck in der ersten Steuerkammer (67) des Relaisventils ab, da sich bei betätigtem Motorwagen-Bremsventil (43) der Druck der ersten Steuerkammer (67) über die Druckmittelleitungen (17) und (15), das geöffnete Ventil des Motorwagen-Bremsventils (43), die Druckmittelleitung (14) und die defekte Druckmittelleitung (21) zur Atmosphäre hin abbaut. Durch den Druckabfall in der ersten Steuerkammer (67) überwiegt die auf den zweiten Relaiskolben (58) ausgeübte Kraft des Druckes in der zweiten Steuerkammer (57). Der zweite Relaiskolben (58) bewegt sich in Richtung auf den ersten Relaiskolben (66) zu, kommt an diesem zur Anlage und hält den ersten Relaiskolben (66) in seiner vorher eingenommenen Position. Zur Steuerung des Relaisventils (26) dient somit bei Ausfall des zweiten Bremskreises (II) der Druck des ersten Bremskreises (I) und zur Versorgung des ersten Bremszylinders (34) der Vorderachse (36) des Fahrzeugs dient in einem solchem Fall der Druck aus dem Druckmittel-Vorratsbehälter (48) des dritten Bremskreises (III).

Wird zwecks Beendigung des Bremsvorgangs das Motorwagen-Bremsventil (43) gelöst, wird die zweite Steuerkammer (57) des Relaisventils (26) über das Motorwagen-Bremsventil (43) zur Atmosphäre hin entlüftet. Aufgrund der dabei auftretenden Differenz zwischen dem Druck in der zweiten Steuerkammer (57) und dem Druck in der Druckmittelausgangskammer (70) wird der zweite Relaiskolben (58) vom ersten Relaiskolben (66) in Richtung auf die zweite Steuerkammer (57) zu verschoben. Der Auslaßventilsitz (71) hebt vom Ventilglied (73) ab. Das Auslaßventil (71, 73) ist dann geöffnet und der Druck der Druckmittelausgangskammer (70) baut sich über das Auslaßventil (71, 73) und den Druckmittelauslaß (81) zur Atmosphäre hin ab. Dabei wird auch der erste Bremszylinder (34) der Vorderachse (36) des Fahrzeugs über die Druckmittelausgangskammer (70) sowie das Auslaßventil (71, 73) und den Druckmittelauslaß (81) des Relaisventils zur Atmosphäre hin entlüftet.

Tritt ein Defekt im dritten Bremskreis (III) auf, so hat dies auf die Steuerfunktion des Relaisventils (26) keine Auswirkung, da der Druck des dritten Bremskreises (III) nicht zur Steuerung des Relaisventils (26) benutzt wird. In einem solchen Fall dient zur Versorgung des ersten Bremszylinders (34) der Vorderachse des Fahrzeugs ausschließlich der Druck des zweiten Bremskreises (II). Die Druckmitteleingangskammer (83) des Relaisventils ist dann mittels des zweiten Rückschlagventils (88, 87, 86) gegen den zweiten Druckmitteleingang (22) abgesperrt.

Tritt ein Defekt im ersten Bremskreis (I) auf, so führt dies zum Ausfall der Funktion der Bremsen der Hinterachse (3). Auf die Funktion der Bremsen der Vorderachse (36) des Fahrzeugs hat dies jedoch keine Auswirkung. Über die Druckmittelleitungen (12) und (14), das Motorwagen-Bremsventil (43) und die Druckmittelleitungen (15) und (17) wird die erste Steuerkammer (67) des Relaisventils (26) bei einem Bremsvorgang mit Druckmittel aus dem Druckmittel-Vorratsbehälter (46) des zweiten Bremskreises (II) beaufschlagt. Mittels des ersten Relaiskolbens (66) wird das kombinierte Einlaß- und Auslaßventil (71, 72, 73) betätigt und der zweite Relaiskolben (58) wird vom Druckmittel in der ersten Steuerkammer (67) in seiner Ausgangsstellung gehalten.

Der erste Bremszylinder (34) der Vorderachse (36) des Fahrzeugs wird über das dann geöffnete Einlaßventil (72, 73) des kombinierten Einlaß- und Auslaßventils (71, 72, 73) mit Druckmittel aus dem zweiten Bremskreis (II) und dem dritten Bremskreis (III) beaufschlagt.

Dadurch, daß die Druckmitteleingangskammer (83) des Relaisventils (26) mit dem Druck aus zwei voneinander getrennten Bremskreisen gespeist wird und dadurch daß zur Betätigung des kombinierten Einlaß- und Auslaßventils (71, 72, 73) des Relaisventils (26) zwei voneinander unabhängig steuerbare Relaiskolben (66, 58) vorgesehen sind, die aus den Druckmittel-Quellen zweier voneinander unabhängiger Bremskreise steuerbar sind, ist gewährleistet, daß bei Ausfall eines dieser Bremskreise die Versorgung des diesem Relaisventil zugeordneten Bremszylinders mit Druckmittel sichergestellt ist.

Die beiden Relaiskolben (66, 58) brauchen selbstverständlich nicht so wie in der Zeichnung dargestellt ausgebildet und zueinander angeordnet zu sein. Von Bedeutung für die Erfindung ist, daß jeder dieser beiden Relaiskolben (66) und (58) vom Druck aus einer separaten Druckmittelquelle beaufschlagt und das kombinierte Einlaß- und Auslaßventil (71, 72, 73) von den Relaiskolben (66) und (58) betätigen werden kann.

Auch die Ausbildung und Anordnung der beiden Rückschlagventile (75, 74, 76) und (88, 87 86) ist nicht an dieses Ausführungsbeispiel gebunden. Von Bedeutung ist, daß bei Abfall des Druckes an dem einen der beiden Druckmitteleingänge (20) oder (22) die Druckmitteleingangskammer (83) des Relaisventils (26) gegen den betroffenen Druckmitteleingang (20 bzw. 22) abgesperrt wird.

In der Beschreibung ist erwähnt, daß die Bremszylinder über die ihnen zugeordneten Steuerventile mit einer Druckmittelquelle oder mit einer Druckmittelsenke verbindbar sind. Eingeschlossen in diese Aussage soll auch sein, daß in die von den Steuerventilen zu den Bremszylindern führenden Druckmittelleitungen zusätzliche Regelventile, wie z. B. ABS-Regelventile, geschaltet sein können, die auch ein Auslaßventil aufweisen, über welches der zugeordnete Bremszylinder mit einer Druckmittelsenke verbunden werden kann. Als Druckmittelsenke wird für pneumatisch betätigte Anlagen die Atmosphäre angesehen. Bei einer hydraulischen Anlage wird die Druckmittelsenke z. B. als Sumpf bezeichnet. Bei der in dieser Patentanmeldung beanspruchten druckmittelbetätigten Fahrzeugbremsanlage kann es sich sowohl um eine pneumatisch betätigte Fahrzeugbremsanlage als auch um eine hydraulische oder kombiniert hydraulisch-pneumatische Fahrzeugbremsanlage handeln.

Die erfindungsgemäße Fahrzeugbremsanlage kann pneumatisch, hydraulisch oder auch elektrisch steuerbar sein.

Wird die erfindungsgemäße Fahrzeugbremsanlage zumindest teilweise elektrisch steuerbar ausgebildet, wie in Unteransprüchen dieser Patentanmeldung angegeben ist, so muß der Mehrkreis-Bremswertgeber wenigstens eine elektrische Einrichtung, wie z. B. ein Potentiometer, und wenigstens einen elektrischen Steuerausgang aufweisen, wobei der elektrische Steuerausgang des Mehrkreis-Bremswertgebers dann mit einem elektrischen Steuereingang eines wenigstens einem Bremszylinder zugeordneten elektrisch steuerbaren Steuerventils zu verbinden ist.

Als elektrisches Steuersignal zum Steuern des Bremsdruckes kann z. B. ein von der Stellung des Betätigungsgliedes (Pedals) des Mehrkreis-Bremswertgebers abhängiges elektrisches Signal dienen.

Das Steuerventil kann als elektrische Steuermittel z. B. ein der Steuerkammer zugeordnetes Proportional-Magnetventil aufweisen. Es ist natürlich auch möglich, das Steuerventil oder auch die Steuerventile als von elektrischen Steuersignalen des Mehrkreis-Bremswertgebers ansteuerbare Druckmodulator bzw. Druckmodulatoren auszubilden.

Gemäß dem Ausführungsbeipiel für die beanspruchte Erfindung ist der Mehrkreis-Bremswertgeber als Motorwagen-Bremsventil für ein Zugfahrzeug ausgebildet, wobei von diesem Motorwagen-Bremsventil ein einem ersten Bremskreis (Hinterachsbremskreis) zugeordnetes pneumatisches Steuersignal und ein einem zweiten Bremskreis (Vorderachsbremskreis) zugeordnetes pneumatisches Steuersignal erzeugt werden. Sowohl die erste Steuerventileinrichtung als auch die zweite Steuerventileinrichtung ist gemäß dem Ausführungsbeispiel für die beanspruchte Erfindung als pneumatisch steuerbares Steuerventil ausgebildet, wobei die zweite Steuerventileinrichtung zwei Steuerventile aufweist.

Unabhängig davon, ob die erfindungsgemäße Fahrzeugbremsanlage pneumatisch, hydraulisch oder elektrisch steuerbar ist, muß jedem Bremszylinder der einen Fahrzeugachse ein separates Steuerventil zugeordnet werden, wobei wenigstens das eine Steuerventil zweikreisig ansteuerbar und die Druckmitteleingangskammer dieses Steuerventils über Kreissicherungsmittel mit zwei verschiedenen Druckmittelquellen verbunden sein muß. Mittels der Kreissicherungsmittel sollen die den einzelnen Bremskreisen zugeordneten Druckmittelquellen gegeneinander abgesichert werden, so daß sich bei einem Defekt in dem einen Bremskreis nicht die Druckmittelquelle eines anderen Bremskreises mit entleert. Selbstverständlich muß nicht jedem Druckmittel-Vorratsbehälter ein eigener Kompressor zugeordnet sein.

Die Anwendung der Erfindung soll selbstverständlich nicht auf die Bremsen an der Vorderachse eines Fahrzeugs beschränkt sein. Die Erfindung kann ebenso Anwendung finden an den Bremsen der Hinterachse oder an den Bremsen der zusätzlicher Achsen des Fahrzeugs.

## Patentansprüche

1. Druckmittelbetätigte Fahrzeugbremsanlage mit wenigstens einem ersten Bremskreis (I) und einem zweiten Bremskreis (II) mit folgenden Merkmalen:
a) dem ersten Bremskreis (I) ist wenigstens ein Bremszylinder (2, 4) zugeordnet, der über eine erste Steuerventileinrichtung 7) in Abhängigkeit von einem dem ersten Bremskreis (I) zugeordneten Steuersignal eines Mehrkreis-Bremswertgebers (43) mit einer Druckmittelquelle (47) für den ersten Bremskreis (I) oder mit einer Druckmittelsenke verbindbar ist;
b) dem zweiten Bremskreis (II) sind ein erster Bremszylinder (34) und ein zweiter Bremszylinder (33) zugeordnet, die über eine zweite Steuerventileinrichtung (26, 30) in Abhängigkeit von einem dem zweiten Bremskreis (II) zugeordneten Steuersignal des Mehrkreis-Bremswertgebers (43) mit einer zweiten Druckmittelquelle (46) für den zweiten Bremskreis (II) oder mit einer Druckmittelsenke verbindbar sind;
gekennzeichnet durch die folgenden Merkmale:
c) die zweite Steuerventileinrichtung (26, 30) besteht aus einem ersten Steuerventil (26) und einem zweiten Steuerventil (30), wobei das erste Steuerventil (26) dem ersten Bremszylinder (34) und das zweite Steuerventil (30) dem zweiten Bremszylinder(33) des ersten Bremskreises (I) zugeordnet ist;
d) das erste Steuerventil (26) ist als zweikreisig ansteuerbares Steuerventil ausgebildet, über das der dem zweiten Bremskreis (II) zugeordnete erste Bremszylinder (34) in Abhängigkeit sowohl von dem dem ersten Bremskreis (I) zugeordneten Steuersignal als auch von dem dem zweiten Bremskreis (II) zugeordneten Steuersignal mit einer Druckmitteleingangskammer des ersten Steuerventils (26) oder mit einer Druckmittelsenke verbindbar ist;
e) die Druckmitteleingangskammer des ersten Steuerventils (26) ist mit zwei verschiedenen Druckmittelquellen (46, 48) verbunden, wobei zwischen der Druckmitteleingangskammer und den Druckmittelquellen (46, 48) Mittel zum Absichern der beiden Druckmittelquellen (46, 48) gegeneinander angeordnet sind;
f) über das zweite Steuerventil (30) ist der dem zweiten Bremskreis (II) zugeordnete zweite Bremszylinder (33) in Abhängigkeit von dem dem zweiten Bremskreis (II) zugeordneten Steuersignal mit der dem zweiten Bremskreis II) zugeordneten Druckmittelquelle (46) oder mit einer Druckmittelsenke verbindbar.

2. Druckmittelbetätigte Fahrzeugbremsanlage nach Anspruch 1, dadurch gekennzeichnet, daß die eine der zwei verschiedenen Druckmittelquellen (46, 48) die Druckmittelquelle (46) für den zweiten Bremskreis (II) und die andere der zwei verschiedenen Druckmittelquellen (46, 48) eine von der Druckmittelquelle (46) für den zweiten Bremskreis (II) unabhängige Druckmittelquelle (48) ist.

3. Druckmittelbetätigte Fahrzeugbremsanlage nach Anspruch 1, dadurch gekennzeichnet, daß die eine der zwei verschiedenen Druckmittelquellen (46, 48) die Druckmittelquelle (46) für den zweiten Bremskreis (II) und die andere der zwei verschiedenen Druckmittelquellen (46, 48) die Druckmittelquelle (48) für einen dritten Bremskreis (III) ist.

4. Druckmittelbetätigte Fahrzeugbremsanlage nach Anspruch 1, dadurch gekennzeichnet, daß das dem ersten Bremskreis (I) zugeordnete Steuersignal ein pneumatisches Steuersignal ist.

5. Druckmittelbetätigte Fahrzeugbremsanlage nach Anspruch 1, dadurch gekennzeichnet, daß das dem ersten Bremskreis (I) zugeordnete Steuersignal ein elektrisches Steuersignal ist.

6. Druckmittelbetätigte Fahrzeugbremsanlage nach Anspruch 1, dadurch gekennzeichnet, daß das dem zweiten Bremskreis (II) zugeordnete Steuersignal ein pneumatisches Steuersignal ist.

7. Druckmittelbetätigte Fahrzeugbremsanlage nach Anspruch 1, dadurch gekennzeichnet, daß das dem zweiten Bremskreis (II) zugeordnete Steuersignal ein elektrisches Steuersignal ist.

8. Druckmittelbetätigte Fahrzeugbremsanlage nach Anspruch 1, gekennzeichnet durch die folgen den Merkmale:
a) der Mehrkreis-Bremswertgeber (43) ist als Motorwagen-Bremsventil mit einem ersten Druckmitteleingang (40), einem zweiten Druckmitteleingang (42), einem dem ersten Druckmitteleingang (40) zugeordneten ersten Druckmittelausgang (39) und einem dem zweiten Druckmitteleingang (42) zugeordneten zweiten Druckmittelausgang (41) ausge bildet;
b) der erste Druckmitteleingang (40) ist mit der zweiten Druckmittelquelle (46) für den zweiten Bremskreis (II) verbunden und der zweite Druckmitteleingang (42) ist mit der ersten Druckmittelquelle (47) für den ersten Bremskreis (I) verbunden;
c) das erste Steuerventil (26) der zweiten Steuerventileinrichtung (30, 26) für den zweiten Bremskreis (II) ist als pneumatisch steuerbares Steuerventil mit einem ersten Steuereingang (18) und einem zweiten Steuereingang (19) ausgebildet;
d) der dem zweiten Bremskreis (II) zugeordnete erste Druckmittelausgang (39) des Motorwagen-Bremsventils (43) ist mit dem ersten Steuereingang (18) des ersten Steuerventils (26) verbunden und der dem ersten Bremskreis (I) zugeordnete zweite Druckmittelausgang (41) des Motorwagen-Bremsventils (43) ist mit dem zweiten Steuereingang (19) des ersten Steuerventils (26) verbunden.

9. Druckmittelbetätigte Fahrzeugbremsanlage nach wenigstens einem der vorhergehenden Ansprüche, gekennzeichnet durch die folgenden Merkmale:
a) das erste Steuerventil (26) der zweiten Steuerventileinrichtung (26, 30) weist eine Druckmitteleingangskammer (83), eine Druckmittelausgangskammer (70) sowie eine mit einem ersten Steuereingang (18) verbundene erste Steuerkammer (67) und eine mit einem zweiten Steuereingang (19) verbundene zweite Steuerkammer (57) auf;
b) die erste Steuerkammer (67) wird von einem ersten Steuerkolben (66) begrenzt und die zweite Steuerkammer (57) wird von einem zweiten Steuerkolben (58) begrenzt;
c) der erste Steuerkolben (66) und der zweite Steuerkolben (58) dienen zur Betätigung eines Einlaß- und Auslaßventils (71, 72, 73) des zweiten Steuerventils (26), über welches die Druckmittelausgangskammer (70) in Abhängigkeit von der Stellung wenigstens eines der beiden Steuerkolben (66, 58) mit der Druckmitteleingangskammer (83) oder mit einem zu einer Druckmittelsenke hinführenden Druckmittelauslaß (81) verbindbar oder gegen beide absperrbar ist;
d) die Druckmittelausgangskammer (70) ist über einen Druckmittelausgang (27) mit dem ersten Bremszylinder (34) verbunden und die Druckmitteleingangskammer (83) steht über einen ersten Druckmitteleingang (20) mit der zweiten Druckmittelquelle (46) für den zweiten Bremskreis (II) und über einen zweiten Druckmitteleingang (22) mit der von der Druckmittelquelle (46) für den zweiten Bremskreis (II) verschiedenen Druck mittelquelle (48) in Verbindung;
e) die erste Steuerkammer (67) ist über den ersten Steuereingang (18) mit dem ersten Druckmittelausgang (39) des Motorwagen-Bremsventils (43) verbunden und die zweite Steuerkammer (57) steht über den zweiten Steuereingang (19) mit dem zweiten Druckmittelausgang (41) des Motorwagen-Bremsventils (43) in Verbindung;
f) die beiden Steuerkolben (66, 58) sind so ausgebildet und stehen derart miteinander und mit dem Einlaß- und Auslaßventil (71, 72, 73) in Wirkverbindung, daß bei Ausfall des ersten Bremskreises (I) oder des zweiten Bremskreises (II) der vom intakten Bremskreis beaufschlagte Steuerkolben (66, 58) das Einlaß- und Auslaßventil (71, 72, 73) betätigt;
g) im ersten Druckmitteleingang (20) und im zweiten Druckmitteleingang (22) ist je ein in Richtung auf die Druckmitteleingangskammer (83) zu in die Offenstellung bringbares Rückschlagventil (74, 75, 76) und (88, 87, 86) angeordnet.

10. Druckmittelbetätigte Fahrzeugbremsanlage nach Anspruch 9, gekennzeichnet durch die folgen den Merkmale:
a) der erste Steuerkolben und der zweite Steuerkolben sind als Relaiskolben (66, 58) ausgebildet und koaxial zueinander angeordnet;
b) der erste Relaiskolben (66) begrenzt mit seiner dem zweiten Relaiskolben (58) abgewandten Seite die Druckmittelausgangskammer (70) und mit seiner dem zweiten Relaiskolben (58) zugewandten Seite die erste Steuerkammer (67);
c) der zweite Relaiskolben (58) begrenzt mit seiner dem ersten Relaiskolben (66) zugewandten Seite die erste Steuerkammer (67) und mit seiner dem ersten Relaiskolben (66) abgewandten Seite die zweite Steuerkammer (57);
d) die beiden Relaiskolben (66, 58) sind so ausgebildet und so zueinander und zum kombinierten Einlaß- und Auslaßventil (71, 72, 73) angeordnet, daß der erste Relaiskolben (66) bei Ausfall des Druckes in der ersten Steuerkammer (67) vom zweiten Relaiskolben (58) in Richtung auf das kombinierte Einlaß- und Auslaßventil (71, 72, 73) zu mitgenommen und der zweite Relaiskolben (58) bei Druckabbau in der zweiten Steuerkammer (57) vom ersten Relaiskolben (66) oder vom Druck in der ersten Steuerkammer (67) in Richtung auf die zweite Steuerkammer (57) zu zurückgeschoben wird.

11. Druckmittelbetätigte Fahrzeugbremsanlage nach wenigstens einem der vorhergehenden Ansprüche, gekennzeichnet durch die folgenden Merk male:
a) der Mehrkreis-Bremswertgeber (43) weist zwei Steuerausgänge (39, 41) auf, wobei wenigstens der eine Steuerausgang (39, 41) als elektrischer Steuerausgang ausgebildet ist, der mit einer elektrischen Einrichtung des Mehrkreis-Bremswertgebers zum Erzeugen eines elektrischen Steuersignals verbunden ist;
b) die erste Steuerventileinrichtung (7) und die zweite Steuerventileinrichtung (26, 30) weisen wenigstens je einen elektrischen Steuereingang auf, der mit elektrischen Steuermitteln der Steuerventileinrichtung (7) bzw. (26, 30) verbunden ist.

12. Druckmittelbetätigte Fahrzeugbremsanlage nach wenigstens einem der vorhergehenden Ansprüche, dadurch gekennzeichnet, daß die elektrischen Steuermittel jeder Steuerventileinrichtung (7, 26, 30) aus einem Proportional-Magnetventil bestehen, welches einer Steuerkammer der Steuerventileinrichtung (7, 26, 30) zugeordnet ist.

13. Druckmittelbetätigte Fahrzeugbremsanlage nach wenigstens einem der vorhergehenden Ansprüche, dadurch gekennzeichnet, daß die Steuerventileinrichtung (7, 26, 30) als elektrisch steuerbarer Druckmodulator ausgebildet ist.

14. Druckmittelbetätigte Fahrzeugbremsanlage nach wenigstens einem der vorhergehenden Ansprüche, dadurch gekennzeichnet, daß die elektrische Einrichtung des Mehrkreis-Bremswertgebers (43) aus einem Potentiometer besteht, welches ein von der Stellung eines Betätigungsgliedes des Mehrkreis-Bremswertgebers (43) abhängiges elektrisches Signal abgibt.

## Claims

1. Pressure-medium-actuated vehicle braking system comprising at least a first brake circuit (I) and a second brake circuit (II), having the following features:
a) associated with the first brake circuit (I) is at least one brake cylinder (2, 4) that can be connected to a pressure medium source (47) for the first brake circuit (I) or to a pressure medium sink by way of a first control valve arrangement (7) in dependence upon a control signal, associated with the first brake circuit (I), of a multiple-circuit brake value transmitter (43);
b) associated with the second brake circuit (II) are a first brake cylinder (34) and a second brake cylinder (33) that can be connected to a second pressure medium source (46) for the second brake circuit (II) or to a pressure medium sink by way of a second control valve arrangement (26, 30) in dependence upon a control signal, associated with the second brake circuit (II), of the multiple-circuit brake value transmitter (43);
characterised by the following features:
c) the second control valve arrangement (26, 30) consists of a first control valve (26) and a second control valve (30), the first control valve (26) being associated with the first brake cylinder (34) and the second control valve (30) being associated with the second brake cylinder (33) of the first brake circuit (I);
d) the first control valve (26) is in the form of a control valve that can be actuated by two circuits, by means of which control valve the first brake cylinder (34) associated with the second brake circuit (II) can be connected to a pressure medium inlet chamber of the first control valve (26) or to a pressure medium sink in dependence upon both the control signal associated with the first brake circuit (I) and the control signal associated with the second brake circuit (II);
e) the pressure medium inlet chamber of the first control valve (26) is connected to two different pressure medium sources (46, 48), there being arranged between the pressure medium inlet chamber and the pressure medium sources (46, 48) means for safeguarding the two pressure medium sources (46, 48) from one another;
f) the second brake cylinder (33) associated with the second brake circuit (II) can be connected to the pressure medium source (46) associated with the second brake circuit (II) or to a pressure medium sink by way of the second control valve (30) in dependence upon the control signal associated with the second brake circuit (II).

2. Pressure-medium-actuated vehicle braking system according to claim 1, characterised in that one of the two different pressure medium sources (46, 48) is the pressure medium source (46) for the second brake circuit (II) and the other of the two different pressure medium sources (46, 48) is a pressure medium source (48) that is independent of the pressure medium source (46) for the second brake circuit (II).

3. Pressure-medium-actuated vehicle braking system according to claim 1, characterised in that one of the two different pressure medium sources (46, 48) is the pressure medium source (46) for the second brake circuit (II) and the other of the two different pressure medium sources (46, 48) is the pressure medium source (48) for a third brake circuit (III).

4. Pressure-medium-actuated vehicle braking system according to claim 1, characterised in that the control signal associated with the first brake circuit (I) is a pneumatic control signal.

5. Pressure-medium-actuated vehicle braking system according to claim 1, characterised in that the control signal associated with the first brake circuit (I) is an electrical control signal.

6. Pressure-medium-actuated vehicle braking system according to claim 1, characterised in that the control signal associated with the second brake circuit (II) is a pneumatic control signal.

7. Pressure-medium-actuated vehicle braking system according to claim 1, characterised in that the control signal associated with the second brake circuit (II) is an electrical control signal.

8. Pressure-medium-actuated vehicle braking system according to claim 1, characterised by the following features:
a) the multiple-circuit brake value transmitter (43) is in the form of a driver's control valve having a first pressure medium inlet (40), a second pressure medium inlet (42), a first pressure medium outlet (39) that is associated with the first pressure medium inlet (40) and a second pressure medium outlet (41) that is associated with the second pressure medium inlet (42);
b) the first pressure medium inlet (40) is connected to the second pressure medium source (46) for the second brake circuit (II) and the second pressure medium inlet (42) is connected to the first pressure medium source (47) for the first brake circuit (I);
c) the first control valve (26) of the second control valve arrangement (30, 26) for the second brake circuit (II) is in the form of a pneumatically controllable control valve having a first control inlet (18) and a second control inlet (19);
d) the first pressure medium outlet (39), associated with the second brake circuit (II), of the driver's control valve (43) is connected to the first control inlet (18) of the first control valve (26) and the second pressure medium outlet (41), associated with the first brake circuit (I), of the driver's control valve (43) is connected to the second control inlet (19) of the first control valve (26).

9. Pressure-medium-actuated vehicle braking system according to at least one of the preceding claims, characterised by the following features:
a) the first control valve (26) of the second control valve arrangement (26, 30) has a pressure medium inlet chamber (83), a pressure medium outlet chamber (70) and also a first control chamber (67) that is connected to a first control inlet (18) and a second control chamber (57) that is connected to a second control inlet (19);
b) the first control chamber (67) is bounded by a first control piston (66) and the second control chamber (57) is bounded by a second control piston (58);
c) the first control piston (66) and the second control piston (58) serve to actuate an inlet and outlet valve (71, 72, 73) of the second control valve (26), by means of which the pressure medium outlet chamber (70) can be connected to, or closed off from, the pressure medium inlet chamber (83) or a pressure medium outlet (81) leading to a pressure medium sink in dependence upon the position of at least one of the two control pistons (66, 58);
d) the pressure medium outlet chamber (70) is connected to the first brake cylinder (34) by way of a pressure medium outlet (27) and the pressure medium inlet chamber (83) is connected, by way of a first pressure medium inlet (20), to the second pressure medium source (46) for the second brake circuit (II) and, by way of a second pressure medium inlet (22), to the pressure medium source (48) which is different from the pressure medium source (46) for the second brake circuit (II);
e) the first control chamber (67) is connected to the first pressure medium outlet (39) of the driver's control valve (43) by way of the first control inlet (18) and the second control chamber (57) is connected to the second pressure medium outlet (41) of the driver's control valve (43) by way of the second control inlet (19);
f) the two control pistons (66, 58) are so constructed and co-operate with one another and with the inlet and outlet valve (71, 72, 73) in such a manner that, in the event of failure of the first brake circuit (I) or of the second brake circuit (II), the control piston (66, 58) that is acted upon by the intact brake circuit actuates the inlet and outlet valve (71, 72, 73);
g) there is arranged in each of the first pressure medium inlet (20) and the second pressure medium inlet (22) a non-return valve (74, 75, 76) and (88, 87, 86), respectively, each of which can be brought to the open position towards the pressure medium inlet chamber (83).

10. Pressure-medium-actuated vehicle braking system according to claim 9, characterised by the following features:
a) the first control piston and the second control piston are in the form of relay pistons (66, 58) and are arranged coaxially with one another;
b) the first relay piston (66) bounds the pressure medium outlet chamber (70) by its side that is remote from the second relay piston (58) and bounds the first control chamber (67) by its side that faces the second relay piston (58);
c) the second relay piston (58) bounds the first control chamber (67) by its side that faces the first relay piston (66) and bounds the second control chamber (57) by its side that is remote from the first relay piston (66);
d) the two relay pistons (66, 58) are so constructed and so arranged relative to one another and to the combined inlet and outlet valve (71, 72, 73) that, in the event of failure of the pressure in the first control chamber (67), the first relay piston (66) is entrained by the second relay piston (58) towards the combined inlet and outlet valve (71, 72, 73) and, in the event of a drop in pressure in the second control chamber (57), the second relay piston (58) is pushed back towards the second control chamber (57) by the first relay piston (66) or by the pressure in the first control chamber (67).

11. Pressure-medium-actuated vehicle braking system according to at least one of the preceding claims, characterised by the following features:
a) the multiple-circuit brake value transmitter (43) has two control outputs (39, 41), with at least one control output (39, 41) being in the form of an electrical control output that is connected to an electrical device of the multiple-circuit brake value transmitter to produce an electrical control signal;
b) the first control valve arrangement (7) and the second control valve arrangement (26, 30) each have at least one electrical control input that is connected to electrical control means of the control valve arrangement (7) or (26, 30).

12. Pressure-medium-actuated vehicle braking system according to at least one of the preceding claims, characterised in that the electrical control means of each control valve arrangement (7, 26, 30) consists of a proportional magnetic valve that is associated with a control chamber of the control valve arrangement (7, 26, 30).

13. Pressure-medium-actuated vehicle braking system according to at least one of the preceding claims, characterised in that the control valve arrangement (7, 26, 30) is in the form of an electrically controllable pressure modulator.

14. Pressure-medium-actuated vehicle braking system according to at least one of the preceding claims, characterised in that the electrical device of the multiple-circuit brake value transmitter (43) consists of a potentiometer which emits an electrical signal that is dependent upon the position of an actuating member of the multiple-circuit brake value transmitter (43).

## Revendications

1. Installation de freinage pour véhicule, actionnée par fluide sous pression, comprenant au moins un premier circuit de freinage (I) et un second circuit de freinage (II) présentant les éléments suivants :
a) au moins un cylindre de frein (2, 4) est associé au premier circuit de freinage (I), qui peut être relié à une source de fluide sous pression (47) pour le premier circuit de freinage (I) ou à une décharge de fluide sous pression, via un premier dispositif de soupape de commande (7) en dépendance d'un signal de commande, associé au premier circuit de freinage (I), provenant d'un émetteur de valeur à circuit multiple (43) ;
b) un premier cylindre de frein (34) et un second cylindre de frein (33) sont associés au second circuit de freinage (II), qui peuvent être reliés à une seconde source de fluide sous pression (46) pour le second circuit de freinage (II) ou à une décharge de fluide sous pression, via un second dispositif de soupape de commande (26, 30) en dépendance d'un signal de commande, associé au second circuit de freinage (II), provenant de l'émetteur de valeur à circuit multiple (43) ;
caractérisée en ce que :
c) le second dispositif de soupape de commande (26, 30) est constitué par une première soupape de commande (26) et par une seconde soupape de commande (30), la première soupape de commande (26) étant associée au premier cylindre de frein (34) et la seconde soupape de commande (30) étant associée au second cylindre de frein (33) du premier circuit de freinage (I) ;
d) la première soupape de commande (26) est réalisée sous forme d'une soupape de commande à deux circuits susceptible d'être pilotée, via laquelle le premier cylindre de frein (34) associé au second circuit de freinage (II) peut être relié à une chambre d'entrée de fluide sous pression de la première soupape de commande (26) ou bien à une décharge de fluide sous pression, en dépendance du signal de commande associé au premier circuit de freinage (I) et également en dépendance du signal de commande associé au second circuit de freinage (II) ;
e) la chambre d'entrée de fluide sous pression de la première soupape de commande (26) est reliée à deux sources de fluide sous pression différentes (46, 48), des organes pour isoler les deux sources de fluide sous pression (46, 48) l'une par rapport l'autre étant agencés entre la chambre d'entrée de fluide sous pression et les sources de fluide sous pression (46, 48) ;
f) le second cylindre de frein (33) associé au second circuit de freinage (II) peut être relié via la seconde soupape de commande (30), en dépendance du signal de commande associé au second circuit de freinage (II), à la source de fluide sous pression (46) associée au second circuit de freinage (II) ou bien à une décharge de fluide sous pression.

2. Installation de freinage pour véhicule, actionnée par fluide sous pression, selon la revendication 1, caractérisée en ce que l'une des deux différentes sources de fluide sous pression (46, 48) est la source de fluide sous pression (46) pour le second circuit de freinage (II) et l'autre des deux différentes sources de fluide sous pression (46, 48) est une source de fluide sous pression (48) indépendante de la source de fluide sous pression (46) pour le second circuit de freinage (II).

3. Installation de freinage pour véhicule, actionnée par fluide sous pression, selon la revendication 1, caractérisée en ce que l'une des deux différentes sources de fluide sous pression (46, 47) est la source de fluide sous pression (46) pour le second circuit de freinage (II) et l'autre des deux différentes sources de fluide sous pression (46, 47) est la source de fluide sous pression (48) pour un troisième circuit de freinage (III).

4. Installation de freinage pour véhicule, actionnée par fluide sous pression, selon la revendication 1, caractérisée en ce que le signal de commande associé au premier circuit de freinage (I) est un signal de commande pneumatique.

5. Installation de freinage pour véhicule, actionnée par fluide sous pression, selon la revendication 1, caractérisée en ce que le signal de commande associé au premier circuit de freinage (I) est un signal de commande électrique.

6. Installation de freinage pour véhicule, actionnée par fluide sous pression, selon la revendication 1, caractérisée en ce que le signal de commande associé au second circuit de freinage (II) est un signal de commande pneumatique.

7. Installation de freinage pour véhicule, actionnée par fluide sous pression, selon la revendication 1, caractérisée en ce que le signal de commande associé au second circuit de freinage (II) est un signal de commande électrique.

8. Installation de freinage pour véhicule, actionnée par fluide sous pression, selon la revendication 1, caractérisée par les éléments suivants :
a) l'émetteur de valeur à circuit multiple (43) est réalisé sous forme d'un robinet de freinage présentant une première entrée de fluide sous pression (40), une seconde entrée de fluide sous pression (42), une première sortie de fluide sous pression (39) associée à la première entrée de fluide sous pression (40), et une seconde sortie de fluide sous pression (41) associée à la seconde entrée de fluide sous pression (42) ;
b) la première entrée de fluide sous pression (40) est reliée à la seconde source de fluide sous pression (46) pour le second circuit de freinage (II), et la seconde entrée de fluide sous pression (42) est reliée à la première source de fluide sous pression (47) pour le premier circuit de freinage (I) ;
c) la première soupape de commande (26) du second dispositif de soupape de commande (30, 26) pour le second circuit de freinage (II) est réalisée sous forme d'une soupape de commande pneumatique comprenant une première entrée de commande (18) et une seconde entrée de commande (19) ;
d) la première sortie de fluide sous pression (39) du robinet de freinage (43), associée au second circuit de freinage (II) est reliée à la première entrée de commande (18) de la première soupape de commande (26), et la seconde sortie de fluide sous pression (41) du robinet de freinage (43), associée au premier circuit de freinage (I), est reliée à la seconde entrée de commande (19) de la première soupape de commande (26).

9. Installation de freinage pour véhicule, actionnée par fluide sous pression, selon l'une quelconque des revendications précédentes, caractérisée par les éléments suivants :
a) la première soupape de commande (26) du second dispositif de soupape de commande (26, 30) présente une chambre d'entrée de fluide sous pression (83), une chambre de sortie de fluide sous pression (70) ainsi qu'une première chambre de commande (67) reliée à une première entrée de commande (18) et une seconde chambre de commande (57) reliée à une seconde entrée de commande (19) ;
b) la première chambre de commande (67) est délimitée par un premier piston de commande (66), et la seconde chambre de commande (57) est délimitée par un second piston de commande (58) ;
c) le premier piston de commande (66) et le second piston de commande (58) servent à actionner une soupape d'entrée et de sortie (71, 72, 73) de la seconde soupape de commande (26), via laquelle la chambre de sortie de fluide sous pression (70) peut être reliée, en dépendance de la position de l'un au moins des deux pistons de commande (66, 58), à la chambre d'entrée de fluide sous pression (83) ou bien à une sortie de fluide sous pression (81) menant jusqu'à une décharge de fluide sous pression, ou bien peut être isolée vis-à-vis des deux ;
d) la chambre de sortie de fluide sous pression (70) est reliée via une sortie de fluide sous pression (27) au premier cylindre de frein (34), et la chambre d'entrée de fluide sous pression (83) est en liaison, via une première entrée de fluide sous pression (20), avec la seconde source de fluide sous pression (46) pour le second circuit de freinage (II) et via une seconde entrée de fluide sous pression (22) avec la source de fluide sous pression (48) différente de la source de fluide sous pression (46) pour le second circuit de freinage (II) ;
e) la première chambre de commande (67) est reliée via la première entrée de commande (18) à la première sortie de fluide sous pression (39) du robinet de freinage (43), et la seconde chambre de commande (57) est en liaison via la seconde entrée de commande (19) avec la seconde sortie de fluide sous pression (41) du robinet de freinage (43) ;
f) les deux pistons de commande (66, 58) sont réalisés de telle manière et sont en liaison active l'un avec l'autre et avec la soupape d'entrée et de sortie (71, 72, 73), de telle sorte que lors d'une défaillance du premier circuit de freinage (I) ou du second circuit de freinage (II), le piston de commande (66, 58) sollicité par le circuit de freinage intact actionne la soupape d'entrée et de commande (71, 72, 73) ;
g) un clapet anti-retour respectif (74, 75, 76) et (88, 87, 86) susceptible d'être amené en position d'ouverture en direction de la chambre d'entrée de fluide sous pression (83) est agencé dans la première entrée de fluide sous pression (20) et dans la seconde entrée de fluide sous pression (22).

10. Installation de freinage pour véhicule actionnée par fluide sous pression selon la revendication 9, caractérisée par les éléments suivants :
a) le premier piston de commande et le second piston de commande sont réalisés sous forme de pistons à relais (66, 58) et sont agencés coaxialement l'un par rapport à l'autre ;
b) le premier piston à relais (66) délimite la chambre de sortie de fluide sous pression (70) par sa face détournée du second piston à relais (58), et délimite la première chambre de commande (67) par sa face orientée vers le second piston à relais (58) ;
c) le second piston à relais (58) délimite la première chambre de commande (67) par sa face orientée vers le premier piston à relais (66), et délimite la seconde chambre de commande (57) par sa face détournée du premier piston à relais (66) ;
d) les deux pistons à relais (66, 58) sont réalisés de telle sorte et sont agencés l'un par rapport à l'autre et par rapport à la soupape d'entrée et de sortie combinée (71, 72, 73) de telle manière que le premier piston à relais (66) est entraîné, lors d'une défaillance de la pression dans la première chambre de commande (67), par le second piston à relais (58) en direction de la soupape d'entrée et de sortie combinée (71, 72, 73), et le second piston à relais (58) est retourné, lors d'une chute de pression dans la seconde chambre de commande (57), par le premier piston à relais (66) ou bien par la pression dans la première chambre de commande (67) en direction de la seconde chambre de commande (57).

11. Installation de freinage pour véhicule actionnée par fluide sous pression selon l'une quelconque des revendications précédentes, caractérisée par les éléments suivants :
a) l'émetteur de valeur à circuit multiple (43) présente deux sorties de commande (39, 41), l'une au moins des sorties de commande (39, 41) étant réalisée sous forme d'une sortie de commande électrique reliée à un dispositif électrique de l'émetteur de valeur à circuit multiple pour produire un signal de commande électrique ;
b) le premier dispositif de soupape de commande (7) et le second dispositif de soupape de commande (26, 30) présentent chacun au moins une entrée de commande électrique qui est reliée à des organes de commande électriques du dispositif de soupape de commande (7) ou (26, 30).

12. Installation de freinage pour véhicule actionnée par fluide sous pression selon l'une quelconque des revendications précédentes, caractérisée en ce que les organes de commande électriques de chaque dispositif de soupape de commande (7, 26, 30) sont constitués par une soupape magnétique proportionnelle qui est associée à une chambre de commande du dispositif de soupape de commande (7, 26, 30).

13. Installation de freinage pour véhicule actionnée par fluide sous pression selon l'une quelconque des revendications précédentes, caractérisée en ce que le dispositif de soupape de commande (7, 26, 30) est réalisé sous forme d'un modulateur de pression à commande électrique.

14. Installation de freinage pour véhicule actionnée par fluide sous pression selon l'une quelconque des revendications précédentes, caractérisée en ce que le dispositif électrique de l'émetteur de valeur à circuit multiple (43) est constitué par un potentiomètre qui envoie un signal électrique dépendant de la position d'un organe d'actionnement de l'émetteur de valeur à circuit multiple (43).
